# EUROPÄISCHE PATENTSCHRIFT

(11) **EP 2 435 215 B1**
(45) Veröffentlichungstag und Bekanntmachung des Hinweises auf die Patenterteilung: **09.10.2019**
(21) Anmeldenummer: 10713968.5
(22) Anmeldetag: 16.04.2010
(51) Int. Cl.: B25F 5/02, H02K 5/14, B24B 23/02

(54) **WERKZEUGMASCHINE, INSBESONDERE HANDWERKZEUGMASCHINE DEREN GEHÄUSETEILE MITTELS FORMSCHLUSSELEMENTEN VERBUNDEN SIND**
POWER TOOL, PARTICULARLY A HAND POWER TOOL, THE HOUSING PARTS THEREOF BEING CONNECTED BY MEANS OF FORM-FITTING ELEMENTS
MACHINE-OUTIL, EN PARTICULIER MACHINE-OUTIL À MAIN, DONT LES PARTIES DE CARTER SONT ASSEMBLÉES PAR DES ÉLÉMENTS À COMPLÉMENTARITÉ DE FORME

(30) Priorität: 27.05.2009 DE 102009026516
(43) Veröffentlichungstag der Anmeldung: 04.04.2012
(60) Teilanmeldung: 17157535.0
(73) Patentinhaber: Robert Bosch GmbH, 70442 Stuttgart (DE)
(72) Erfinder: MAUTE, Joerg, 71069 Sindelfingen (DE); ESENWEIN, Florian, 73066 Uhingen-Holzhausen (DE); STIERLE, Peter, 72124 Pliezhausen (DE); SCHOMISCH, Thomas, 70794 Filderstadt (DE)
(86) Internationale Anmeldenummer: PCT/EP2010/055028
(87) Internationale Veröffentlichungsnummer: WO 2010/136262

(56) Entgegenhaltungen:
- EP-A1- 0 502 363
- WO-A1-2009/068340
- WO-A1-2009/118070
- WO-A1-2010/023008
- WO-A1-2010/026963
- DE-A1- 19 538 252
- DE-A1- 19 959 920
- DE-A1-102007 017 243

## Beschreibung

Die Erfindung bezieht sich auf eine Werkzeugmaschine, insbesondere eine Handwerkzeugmaschine, mit einem aus einem Motorgehäuse und einem Gehäusedeckel zusammengesetzten Gehäuse.

### Stand der Technik

Aus der DE 10 2007 017 243 A1 ist eine Handwerkzeugmaschine mit einem elektrischen Antriebsmotor in einem mehrteiligen Gehäuse bekannt, das ein Getriebegehäuse und ein Motorgehäuse umfasst, wobei das Motorgehäuse, in welchem der elektrische Antriebsmotor aufgenommen ist, mit einem topfförmigen Gehäusedeckel versehen ist, der lösbar mit dem Motorgehäuse verbunden ist. In den Gehäusedeckel ist benachbart zu dessen Stirnseite eine Ausnehmung eingebracht, in die ein Bürstendeckel eingesetzt ist, welcher im montierten Zustand axial in Höhe der Bürsten des Elektromotors angeordnet ist. Der Bürstendeckel ist ebenfalls lösbar im Gehäusedeckel aufgenommen und kann zu Zwecken der Wartung der Kohlebürsten geöffnet werden. Beim Öffnen des Bürstendeckels kann der Gehäusedeckel seine montierte Lage am Motorgehäuse beibehalten.

Das Motorgehäuse, der Gehäusedeckel und der Bürstendeckel bestehen üblicherweise aus Kunststoff und werden im Spritzgussverfahren hergestellt. Hierbei ist auf eine hohe Maßgenauigkeit zu achten, um im montierten Zustand eine glattflächige Gehäuseaußenseite auch im Bereich der Gehäuseteilübergänge zu gewährleisten.

In der DE 199 59 920 A1 wird eine elektrische Handwerkzeugmaschine beschrieben, die ein aus einem Motorgehäuse und einem Gehäusedeckel zusammengesetztes Gehäuse aufweist, wobei im Motorgehäuse ein elektrischer Antriebsmotor aufgenommen ist. In den Gehäusedeckel ist ein Bürstendeckel lösbar einsetzbar, der eine Bürstendeckelausnehmung zur Aufnahme von Kohlebürsten überdeckt. Am Motorgehäuse und am Gehäusedeckel sind korrespondierende Formschlusselemente angeordnet, die in montierter Position formschlüssig ineinandergreifen. Der Bürstendeckel ist ebenfalls formschlüssig am Gehäusedeckel gehalten.

### Offenbarung der Erfindung

Der Erfindung liegt die Aufgabe zugrunde, mit einfachen Maßnahmen eine glattflächige Gehäuseaußenkontur in Werkzeugmaschinen sicherzustellen.

Diese Aufgabe wird erfindungsgemäß mit den Merkmalen des unabhängigen Anspruchs 1 gelöst. Die abhängigen Ansprüche geben zweckmäßige Weiterbildungen an.

Die erfindungsgemäße Werkzeugmaschine, bei der es sich beispielsweise um eine Elektrohandwerkzeugmaschine handelt, weist ein Gehäuse auf, das ein Motorgehäuse und einen Gehäusedeckel umfasst, wobei im Motorgehäuse ein elektrischer Antriebsmotor aufgenommen ist. In einer Ausnehmung im Gehäusedeckel ist ein Bürstendeckel lösbar aufgenommen, der zu Zwecken der Wartung von Kohlebürsten des elektrischen Antriebsmotors aus dem Gehäusedeckel entfernt werden kann, ohne dass die Notwendigkeit besteht, auch den Gehäusedeckel vom Motorgehäuse zu lösen.

Gemäß eines ersten Aspektes der Erfindung sind am Motorgehäuse und am Gehäusedeckel korrespondierende Formschlusselemente angeordnet, die in der montierten Lage formschlüssig miteinander verbunden sind. Des Weiteren ist vorgesehen, dass auch der Bürstendeckel am Gehäusedeckel und/oder am Motorgehäuse formschlüssig gehalten ist.

Diese Ausführung weist verschiedene Vorteile auf. Da einerseits sowohl das Motorgehäuse als auch der Gehäusedeckel formschlüssig miteinander verbunden sind und andererseits auch der Bürstendeckel mit Formschluss am Gehäusedeckel und am Motorgehäuse gehalten ist, können über den Formschluss Toleranzen bzw. ein Materialverzug kompensiert werden, die bzw. der entweder bereits bei der Herstellung der Gehäuseteile oder beim Zusammenbau bzw. im Betrieb der Werkzeugmaschine auftreten können. Insbesondere für den Fall, dass die Bürstendeckelausnehmung sich bis zur freien Stirnseite des Gehäusedeckels erstreckt, besteht im Übergangsbereich zwischen der axialen die Ausnehmungs begrenzenden Wandung und der Stirnseite des Gehäusedeckels eine frei stehende Ecke, die einer erhöhten Gefahr eines radialen Aufbiegens unterliegt, was zur Folge hätte, dass die Ecke im montierten Zustand des Gehäusedeckels die Außenkontur des Gehäuses überragt. Aufgrund des Formschlusses wird jedoch selbst bei einer Maßungenauigkeit eines oder mehrerer Gehäuseteile in der montierten Lage eine glattflächige Gehäuseaußenseite erreicht. Eventuell im unverbauten Zustand radial überstehende Gehäuseteile werden mittels des Formschlusses in die gewünschte Einbaulage gezwungen, so dass trotz eines Verzugs oder einer Maßungenauigkeit des Gehäusedeckels eine glattflächige Außenseite gegeben ist.

Aufgrund des kombinierten Formschlusses zwischen den verschiedenen zusammenwirkenden Gehäuseteilen kann auch eine Sicherung, gegebenenfalls eine Verriegelung zwischen Motorgehäuse und Gehäusedeckel mithilfe des Bürstendeckels erreicht werden. Motorgehäuse und Gehäusedeckel werden bei der Montage in einem ersten Schritt formschlüssig miteinander verbunden, daraufhin wird in einem zweiten Schritt der Bürstendeckel eingesetzt, dessen Formschluss zur Fixierung des zwischen Motorgehäuse und Gehäusedeckel bestehenden Formschlusses genutzt werden kann. Zugleich dient der Bürstendeckel-Formschluss zur Sicherung des Bürstendeckels am Motorgehäuse bzw. am Gehäusedeckel. Es kann aber auch zweckmäßig sein, eine zusätzliche, sonstige Verbindungsart für den Bürstendeckel am Gehäusedeckel vorzusehen, beispielsweise durch Anschrauben des Bürstendeckels am Gehäusedeckel oder an einem darunter liegenden Bauteil, insbesondere am Motorgehäuse bzw. einem damit verbundenen Bauteil.

Der Formschluss zwischen Motorgehäuse und Gehäusedeckel erfolgt beispielsweise über eine am Motorgehäuse ausgebildete Zentrierrippe, die sich über die Mantelfläche eines Verbindungsabschnittes am Motorgehäuse erhebt, an den der Gehäusedeckel montiert wird. Ein Abschnitt des Gehäusedeckels stützt sich in Umfangsrichtung an der Zentrierrippe am Motorgehäuse ab. Die Zentrierrippe kann gegebenenfalls am Motorgehäuse, bezogen auf die Umfangsrichtung, eine schräg gestellte Stützfläche aufweisen, die zur Abstützung eines Gehäusedeckelteils dient. Durch die Schrägstellung der Zentrierrippe wird das daran anliegende Gehäusedeckelteil in Radialrichtung nach innen gedrückt, wodurch eine glattflächige Gehäuseaußenseite gewährleistet ist.

Möglich ist es aber auch, an der Zentrierrippe am Motorgehäuse einen Hinterschnittbereich vorzusehen, der sich zwischen der radial erhabenen Zentrierrippe und der Mantelfläche des Verbindungsabschnittes am Motorgehäuse erstreckt, wobei in der montierten Lage ein Gehäusedeckelteil in den Hinterschnittbereich einragt. Der Hinterschnittbereich kann so gestaltet sein, dass das einragende Gehäusedeckelteil analog zur schräg gestellten Zentrierrippe mit einer radialen Kraftkomponente nach innen beaufschlagt wird. In beiden Fällen, also sowohl bei schräg gestellter Zentrierrippe als auch bei einem von der Zentrierrippe begrenzten Hinterschnittbereich, erfolgt der Einschub des Gehäusedeckels zweckmäßigerweise in Achsrichtung. In den Gehäusedeckel ist hierfür vorteilhafterweise eine Rippenausnehmung zur Aufnahme der Zentrierrippe eingebracht.

Ein Formschluss in Umfangsrichtung und/oder Radialrichtung zwischen Motorgehäuse und Gehäusedeckel kann auch dadurch erzielt werden, dass an einem der beteiligten Bauteile eine Nut und am anderen Bauteil ein Steg ausgebildet ist und die Nut bzw. der Steg sich in Achsrichtung des Gehäuses erstrecken, so dass der Steg axial in die Nut einführbar ist.

Des Weiteren ist es möglich, an der Bürstendeckelausnehmung ein sich in Umfangsrichtung erstreckendes Hakenelement anzuordnen, das mit einem Formschlussglied versehen ist. Das Formschlussglied erstreckt sich zweckmäßigerweise in Achsrichtung und somit orthogonal zum Hakenelement und ist mit einem korrespondierenden Formschlussglied am Motorgehäuse in einen formschlüssigen Eingriff zu bringen. Möglich ist es außerdem, dass sich das Formschlussglied in Radialrichtung erstreckt und in montierter Lage radial von dem Bürstendeckel übergriffen wird. Dem Bürstendeckel kommt damit die Funktion zu, den Gehäusedeckel radial an den Verbindungsabschnitt am Motorgehäuse anzudrücken und in dieser Position zu sichern.

Erfindungsgemäß ist in den Verbindungsabschnitt am Motorgehäuse ein sich in Achsrichtung erstreckender Schlitz eingebracht, in den in montierter Lage eine Deckelrippe am Gehäusedeckel und am Bürstendeckel eingreift. Auch hierdurch kann in Umfangsrichtung eine formschlüssige Verbindung zwischen dem Gehäusedeckel und dem Motorgehäuse und zwischen dem Bürstendeckel und dem Motorgehäuse hergestellt werden. Sowohl am Gehäusedeckel als auch am Bürstendeckel ist jeweils mindestens eine Deckelrippe zum Eingriff in den Schlitz am Motorgehäuse angeordnet.

Des Weiteren ist es möglich, am Bürstendeckel ein Formschlusselement vorzusehen, das in der montierten Lage in ein korrespondierendes Formschlusselement entweder am Motorgehäuse oder am Gehäusedeckel eingreift. Das Formschlusselement am Bürstendeckel befindet sich zweckmäßigerweise an dessen Unterseite und ist beispielhaft als radial nach innen ragender Nocken ausgeführt, welcher in eine korrespondierende Schlitzausnehmung entweder am Gehäusedeckel und/oder am Motorgehäuse eingreift. Der Formschluss wird in Radialrichtung hergestellt und ist sowohl in Achsrichtung als auch in Umfangsrichtung wirksam.

Gemäß noch einer vorteilhaften Ausführung ist an der Innenseite des Gehäusedeckels mindestens eine radial nach innen versetzte Verschattungsrippe zum Schutz elektrischer Komponenten angeordnet, die in Eingriff mit einer zugeordneten Ausnehmung am Motorgehäuse zu bringen ist. Die Verschattungsrippe kann zu diesem Zweck axial verlängert sein und gegebenenfalls die Stirnseite des Gehäusedeckels überragen. Der Formschluss zwischen der Verschattungsrippe und der zugeordneten Ausnehmung wird in Achsrichtung hergestellt und ist in Umfangsrichtung und gegebenenfalls auch in Radialrichtung wirksam.

Um einen Bürstenwechsel mit geringem Aufwand durchführen zu können, ist am Gehäusedeckel und/oder am Bürstendeckel im Bereich der die Bürstendeckelausnehmung begrenzenden und den Bürstendeckel aufnehmenden Wandung ein radial verstärkter Abschnitt ausgebildet, dessen Wanddicke gegenüber benachbarten Wandabschnitten erhöht ist.

Diese Ausführung ermöglicht es, ein Spiel zwischen den radial benachbarten Gehäuseteilen, welches, da für das Fügen der Teile notwendig, auch als Montageluft bezeichnet wird, während der Montage beim Aufsetzen des Bürstendeckels teilweise oder vollständig zu eliminieren, indem der Gehäusedeckel radial nach innen gedrückt wird. Das Spiel in Radialrichtung erlaubt eine Verformung des Gehäusedeckels ebenfalls in Radialrichtung, so dass eventuell nach außen ragende Gehäusedeckelabschnitte nach innen gedrückt werden und hierdurch eine glattflächige Gehäuseaußenseite erreicht wird. Der radial verstärkte Abschnitt befindet sich insbesondere in unmittelbarer Nachbarschaft zu den sich typischerweise radial aufstellenden Ecken im Übergang zwischen axialer Begrenzung der Bürstendeckelausnehmung und der Stirnseite des Gehäusedeckels, wobei diese Ecken anfällig für eine unerwünschte radiale Aufweitung sind. Da der radial verstärkte Abschnitt sich neben dieser Ecke befindet bzw. bis zu dieser Ecke erstreckt, wird mit dem Einsetzen des Bürstendeckels sowohl der radial verstärkte Abschnitt als auch die unmittelbar benachbarten Wandabschnitte radial nach innen gedrückt.

Gemäß einer zweckmäßigen Ausführung ist vorgesehen, dass der radial verstärkte Abschnitt Keilform aufweist, wobei sich die Wandstärke in Richtung der Stirnseite des Gehäusedeckels vergrößert. Aufgrund der Keilform nimmt die Wandstärke in Achsrichtung zur freien Stirnseite hin zu, so dass eine benachbart zur freien Stirnseite stärkere radiale Aufweitung im Gehäusedeckel durch die größere Wandstärke des radial verdickten Bereiches kompensiert wird.

Gemäß noch eines weiteren Aspektes der Erfindung ist ein die Bürstendeckelausnehmung in Umfangsrichtung vollständig überbrückender Verstärkungssteg vorgesehen, der die Steifigkeit des Gehäusedeckels erheblich verbessert, wodurch die Gefahr eines radialen Aufweitens und damit einhergehend eines die Gehäusemantelfläche überragenden Gehäuseteils reduziert ist. Der sich in Umfangsrichtung erstreckende Verstärkungssteg befindet sich vorzugsweise in unmittelbarer Nachbarschaft zur Stirnseite des Gehäusedeckels, wobei gegebenenfalls auch Ausführungen in Betracht kommen, in welchem der Gehäusesteg mit axialem Abstand zur Stirnseite angeordnet ist.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung einer als Winkelschleifer ausgeführten Elektrohandwerkzeugmaschine, mit einem Motorgehäuse und einem daran angeordneten Gehäusedeckel, in den ein Bürstendeckel eingesetzt ist,
- Fig. 2: eine vergrößerte Darstellung des Motorgehäuses im Bereich eines Verbindungsabschnittes, auf den der Gehäusedeckel aufzusetzen ist, wobei am Verbindungsabschnitt eine schräg gestellte Zentrierrippe angeordnet ist,
- Fig. 3: eine ähnliche Ausführung wie Fig. 2, jedoch mit einem von der Zentrierrippe begrenzten Hinterschnittbereich,
- Fig. 4: das Motorgehäuse in einer nicht erfindungsgemäßen Ausführung mit einer sich in Achsrichtung erstreckenden Aufnahmenut,
- Fig. 5: eine Einzeldarstellung eines Gehäusedeckels mit sich in Achsrichtung erstreckenden Stegen, die in Aufnahmenuten gemäß der Ausführung nach Fig. 4 axial einzuführen sind,
- Fig. 6: eine perspektivische Einzeldarstellung eines Gehäusedeckels mit einer verbreiterten axialen Nut an der Gehäuseinnenwand im Bereich der Stirnseite zur Aufnahme einer Zentrierrippe,
- Fig. 7: ein Gehäusedeckel in einer nicht erfindungsgemäßen Ausführung mit sich in Umfangsrichtung erstreckenden Hakenelementen benachbart zur freien Stirnseite des Gehäusedeckels,
- Fig. 8: ein Motorgehäuse mit sich in Achsrichtung erstreckenden Schlitzen zur Aufnahme von Deckelrippen an der Unterseite des Bürstendeckels bzw. des Gehäusedeckels,
- Fig. 9: eine ähnliche Ausführung wie Fig. 8, jedoch mit zwei unmittelbar nebeneinander liegenden Schlitzen im Motorgehäuse,
- Fig. 10: eine Schnittdarstellung durch ein fertig montiertes Gehäuse mit radial innen liegendem Motorgehäuse, zwischenliegendem Gehäusedeckel und radial aufliegendem Bürstendeckel,
- Fig. 11: eine Darstellung auf ein Motorgehäuse und einen Gehäusedeckel mit abgenommenem Bürstendeckel, wobei am Gehäusedeckel im Bereich der Bürstendeckelausnehmung ein aufnehmendes Formschlusselement ausgebildet ist, das zur Aufnahme einer Deckelrippe oder Deckelnoppe an der Innenseite des Bürstendeckels dient,
- Fig. 12: eine Einzeldarstellung eines Bürstendeckels mit einem sich an der Unterseite erstreckenden Dom zur Aufnahme einer Verbindungsschraube sowie mit im Seitenbereich angeordneten Nocken, welche in die Aufnahmeformschlusselemente an der Bürstendeckelausnehmung einsetzbar sind,
- Fig. 13: eine Schnittdarstellung durch das Gehäuse gemäß den Fig. 11 und 12,
- Fig. 14: ein Gehäusedeckel mit an der Innenwand angeordneten, sich in Achsrichtung erstreckenden Verschattungsrippen,
- Fig. 15: ein Gehäusedeckel mit einem radial verstärkten Abschnitt im Bereich der die Bürstendeckelausnehmung begrenzenden Wandung,
- Fig. 16: ein Gehäusedeckel mit einem die Bürstendeckelausnehmung in Umfangsrichtung überbrückenden Verstärkungssteg, der unmittelbar benachbart zur Stirnseite des Gehäusedeckels angeordnet ist,
- Fig. 17: ein Gehäusedeckel in einer weiteren Ausführung, die ähnlich zu Fig. 16 ist, wobei der Verstärkungssteg mit axialem Abstand zur Stirnseite des Gehäusedeckels angeordnet ist.

In den Figuren sind gleiche Bauteile mit gleichen Bezugszeichen versehen.

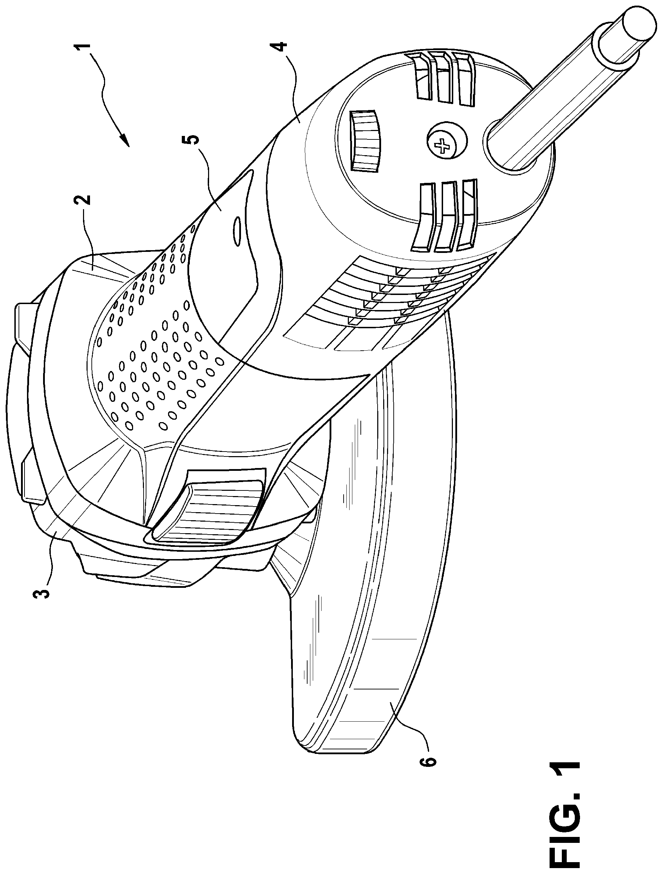

Bei der in Fig. 1 dargestellten Elektrohandwerkzeugmaschine 1 handelt es sich beispielhaft um einen Winkelschleifer, der ein Motorgehäuse 2 zur Aufnahme eines elektrischen Antriebsmotors aufweist. An das Motorgehäuse 2 schließt sich axial ein Getriebegehäuse an, in welchem ein Werkzeug der Elektrohandwerkzeugmaschine 1 gelagert ist und von einer Schutzhaube 6 übergriffen wird. Axial an der dem Getriebegehäuse 3 gegenüberliegenden Seite schließt sich an das Motorgehäuse 2 ein Gehäusedeckel 4 an, der als separat vom Motorgehäuse 2 ausgebildetes Bauteil ausgeführt und lösbar mit dem Motorgehäuse 2 zu verbinden ist. An der Oberseite des Gehäusedeckels 4 befindet sich ein Bürstendeckel 5, der lösbar in eine Bürstendeckelausnehmung im Gehäusedeckel 4 eingesetzt ist. Der Bürstendeckel 5 kann ohne Lösen des Gehäusedeckels entfernt und wieder in die Bürstendeckelausnehmung eingesetzt werden. Bei entferntem Bürstendeckel 5 können Wartungsarbeiten an unmittelbar darunter liegenden Kohlebürsten des elektrischen Antriebsmotors durchgeführt werden. Gegebenenfalls befindet sich auch diametral gegenüberliegend an der Unterseite des Gehäusedeckels ein derartiger, lösbar in den Gehäusedeckel eingesetzter Bürstendeckel.

Das Motorgehäuse 2, der Gehäusedeckel 4 sowie der Bürstendeckel 5 bestehen zweckmäßigerweise jeweils aus Kunststoff und werden im Kunststoff-Spritzgießverfahren hergestellt.

Der bzw. die Bürstendeckel 5 sind vorzugsweise formschlüssig am Motorgehäuse 2 und/oder am Gehäusedeckel 4 gehalten und werden darüber hinaus über eine Verbindungsschraube oder ein ähnliches Verbindungselement mit dem Motorgehäuse oder einem mit dem Motorgehäuse verbundenen Bauteil verbunden.

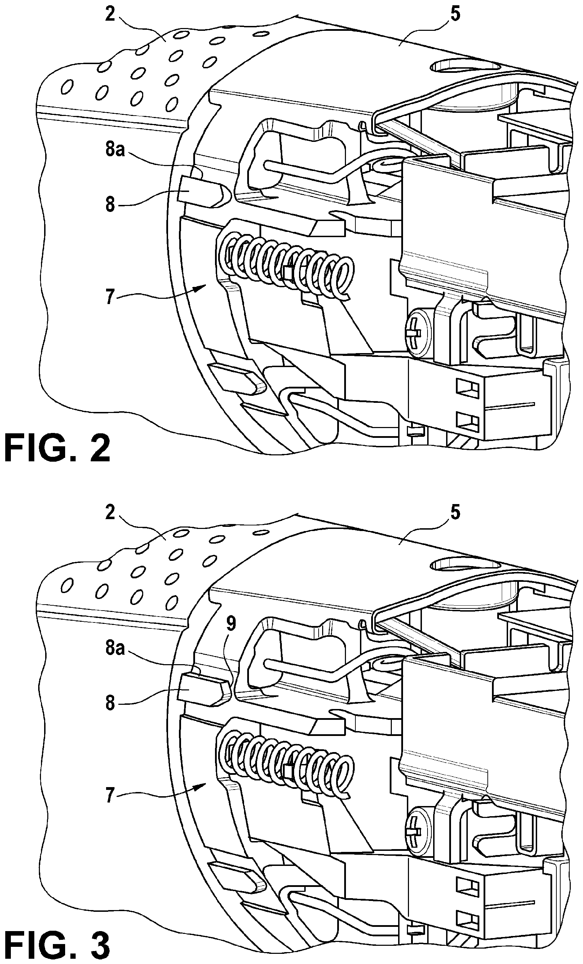

In Fig. 2 ist das Gehäuse der Handwerkzeugmaschine ohne Gehäusedeckel, jedoch mit aufgesetztem Bürstendeckel 5 dargestellt. Im Verbindungsbereich zum Motorgehäuse 2 weist dieses einen Verbindungsabschnitt 7 auf, der ringförmig ausgebildet ist und sich in Richtung des Gehäusedeckels erstreckt. Bezogen auf die äußere Mantelfläche des Motorgehäuses 2 ist der Verbindungsabschnitt 7 geringfügig radial nach innen versetzt zur bündigen Aufnahme des Gehäusedeckels und des Bürstendeckels.

Einteilig mit dem Verbindungsabschnitt 7 ist eine Zentrierrippe 8 ausgebildet, die radial erhaben ausgeführt ist und eine seitliche Stützfläche 8a aufweist. Diese seitliche Stützfläche 8a ist abgeschrägt ausgeführt, dergestalt, dass die Stützfläche 8a gegenüber einer Radialen einen Winkel einschließt, so dass ein an der seitlichen Stützfläche 8a sich abstützendes Bauteil am Gehäusedeckel eine radial nach innen gerichtete Kraftkomponente erfährt. Auf diese Weise ist sichergestellt, dass der Gehäusedeckel im Bereich seiner axialen Stirnseite trotz eines eventuell bestehenden Verzuges oder Maßtoleranzen keine radial über die Gehäuseaußenseite überstehenden Bauteile aufweist. Vielmehr werden eventuell radial nach außen abstehende Ecken, Kanten oder dergleichen über die Zentrierrippe 8 mit der abgeschrägten Stützfläche 8a in eine gewünschte Soll- bzw. Normposition gezwungen, so dass eine glattflächige Gehäuseaußenfläche gewährleistet ist.

Das nicht erfindungsgemäße Ausführungsbeispiel gemäß Fig. 3 entspricht weitgehend demjenigen nach Fig. 2, jedoch mit dem Unterschied, dass die seitliche Stützfläche 8a der Zentrierrippe 8 sich in Radialrichtung erstreckt. Des Weiteren ist vorgesehen, dass die Stützfläche 8a einen Hinterschnittbereich 9 begrenzt, der am Verbindungsabschnitt 7 gebildet ist. Der Hinterschnittbereich 9 ist als Nut ausgeführt und umfasst eine von der Zentrierrippe 8 begrenzte Nut, die zur formschlüssigen Aufnahme eines Bauteils des Gehäusedeckels dient.

Sowohl im nicht erfindungsgemäßen Ausführungsbeispiel nach Fig. 2 als auch im nicht erfindungsgemäßen Ausführungsbeispiel nach Fig. 3 ist der Gehäusedeckel in montierter Position in Umfangsrichtung und auch radial nach außen formschlüssig am Motorgehäuse 2 gehalten.

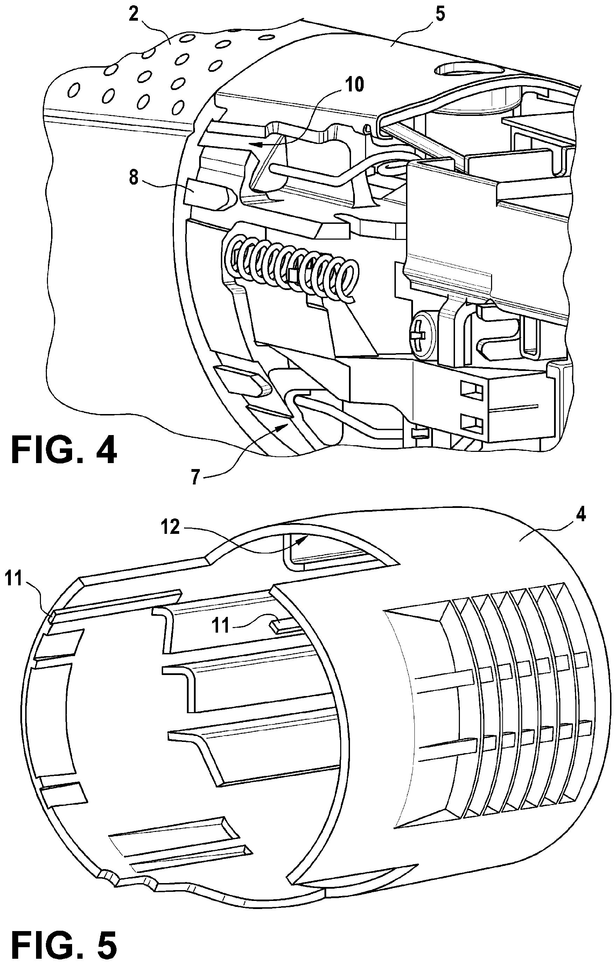

Im nicht erfindungsgemäßen Ausführungsbeispiel gemäß den Fig. 4 und 5 ist eine weitere formschlüssige Verbindung zwischen Motorgehäuse 2 und Gehäusedeckel 4 dargestellt. Wie Fig. 4 zu entnehmen, ist im Bereich des Verbindungsabschnittes 7 in das Motorgehäuse 2 eine sich in Achsrichtung erstreckende Nut 10 eingebracht, die zur Aufnahme eines sich in Achsrichtung erstreckenden, an der Innenwand angeordneten Stegs 11 am Gehäusedeckel 4 dient. Der Steg 11 kann die freie Stirnseite des Gehäusedeckels 4 axial überragen. Zweckmäßigerweise sind über den Umfang verteilt eine Mehrzahl von Nuten 10 und Stegen 11 vorgesehen, ebenso Zentrierrippen am Verbindungsabschnitt 7, die mit korrespondierenden Ausnehmungen am Gehäusedeckel in Eingriff zu bringen sind. Die Nut-Steg-Verbindung gemäß Fig. 4 und 5 stellt ebenfalls eine formschlüssige Verbindung in Umfangsrichtung und gegebenenfalls auch in Radialrichtung dar.

Wie Fig. 5 weiter zu entnehmen, ist in den Gehäusedeckel 4 eine Bürstendeckelausnehmung 12 eingebracht, die zur Stirnseite des Gehäusedeckels offen ausgeführt ist. Die sich bis zur axialen Stirnseite erstreckende Bürstendeckelausnehmung 12 dient zur Aufnahme des Bürstendeckels. Benachbart zur Bürstendeckelausnehmung 12 ist an der Innenwand des Gehäusedeckels 4 jeweils ein sich in Achsrichtung erstreckender Steg 11 angeordnet. Bei formschlüssigem Eingreifen des Steges 11 in die zugeordnete Nut 10 am Motorgehäuse 2 wird auch die unmittelbar dem Steg 11 benachbarte Ecke zwischen dem Umfang an der Stirnseite des Gehäusedeckels 4 und der die Bürstendeckelausnehmung 12 axial begrenzenden Wandung in Radialrichtung und in Umfangsrichtung fixiert.

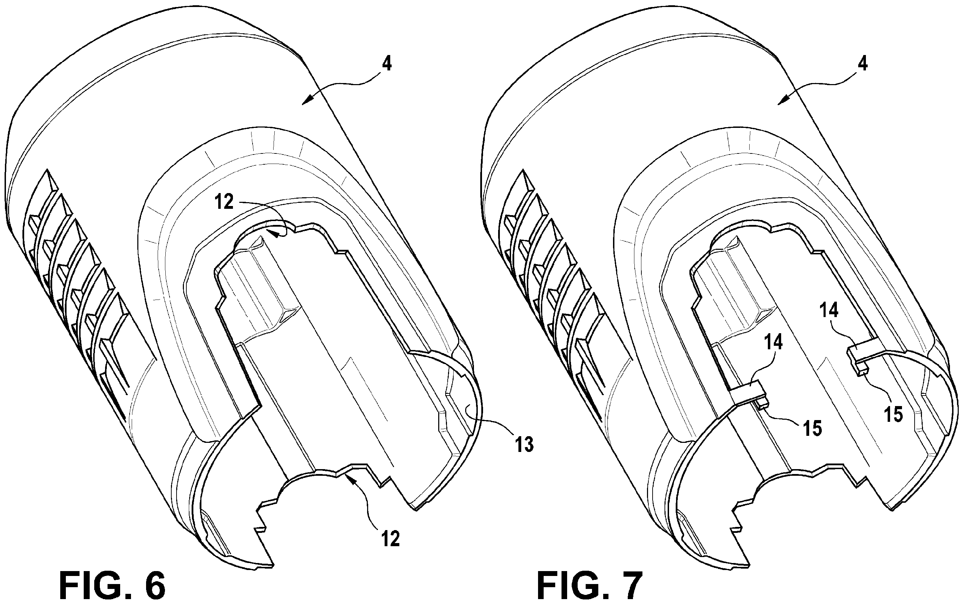

Wie Fig. 6 zu entnehmen, ist an diametral gegenüberliegenden Seiten jeweils eine Bürstendeckelausnehmung 12 in den Gehäusedeckel 4 eingebracht. An der Stirnseite ist zwischen den gegenüberliegenden Bürstendeckelausnehmungen 12 jeweils eine verbreiterte Nut 13 an der Innenseite der Wandung des Gehäusedeckels 4 vorgesehen, wobei die verbreiterte Nut 13 zur Aufnahme der Zentrierrippen 8 (Fig. 2 bis 4) am Motorgehäuse 2 dient. Die verbreiterten Nuten 13 befinden sich in Umfangsrichtung zwischen den Bürstendeckelausnehmungen 12.

Im nicht erfindungsgemäßen Ausführungsbeispiel gemäß Fig. 7 ist die Bürstendeckelausnehmung 12 im Bereich der Stirnseite des Gehäusedeckels 4 in Umfangsrichtung teilweise übergriffen von jeweils einem Hakenelement 14. Jedes der sich in Umfangsrichtung erstreckenden Hakenelemente 14 ragt an der Stirnseite des Gehäusedeckels 4 in die Bürstenausnehmung 12 ein. An der Unterseite jedes Hakenelementes 14 befindet sich ein Formschlussglied 15 in Form eines Vorsprunges, der sich bezogen auf das Hakenelement 14 sowohl radial nach innen als auch axial über die freie Stirnseite des Gehäusedeckels 4 hinausgehend erstreckt. Das Formschlussglied 15 ist in formschlüssigen Eingriff mit einer zugeordneten Ausnehmung am Motorgehäuse zu bringen und ermöglicht dadurch einen Formschluss in Radialrichtung und in Umfangsrichtung. Zum Herstellen des Formschlusses wird das Formschlussglied 15 axial in die zugeordnete Ausnehmung eingeführt.

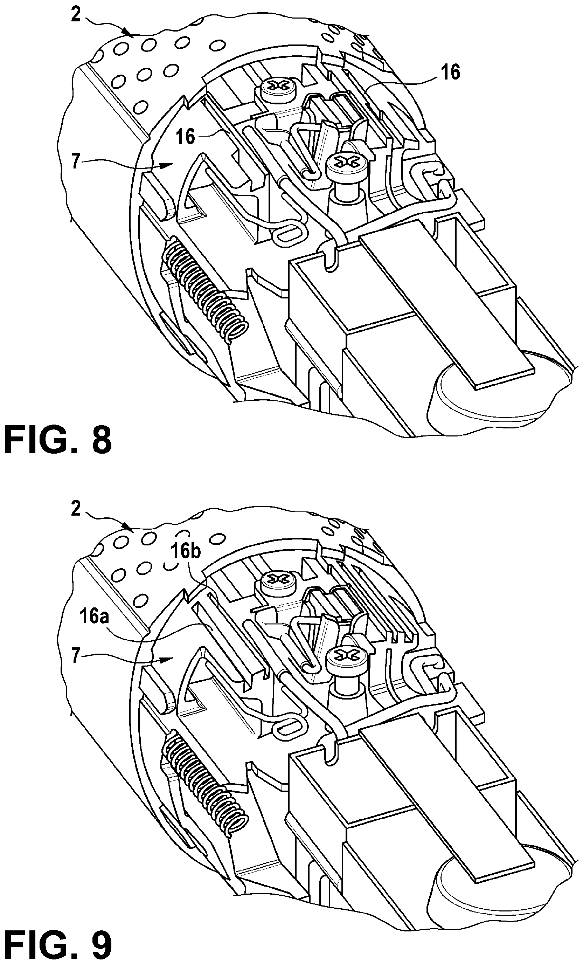

Im Ausführungsbeispiel gemäß Fig. 8 ist in den Verbindungsabschnitt 7 des Motorgehäuses 2 ein sich in Achsrichtung erstreckender Schlitz 16 eingebracht, der zur Aufnahme einer Deckelrippe dient, die an der Unterseite des Gehäusedeckels und an der Unterseite des Bürstendeckels angeordnet ist. Vorgesehen sind zwei parallel zueinander verlaufende, sich in Achsrichtung erstreckende Schlitze 16, die in Umfangsrichtung etwa der Erstreckung des Bürstendeckels entsprechend auseinanderliegen. Die Schlitze 16 erlauben in Umfangsrichtung einen Formschluss. Jeder Schlitz 16 kann im Bereich einer axialen Schlitzstirnseite einen verbreiterten Einlaufbereich aufweisen, der das axiale Einführen der Deckelrippe an der Unterseite des Gehäusedeckels bzw. des Bürstendeckels erleichtert. Dieser verbreiterte Bereich kann außerdem zur Aufnahme einer Deckelrippe in montierter Lage dienen. Erfindungsgemäß ist in dem betreffenden Schlitz 16 sowohl eine Deckelrippe am Gehäusedeckel als auch eine Deckelrippe am Bürstendeckel aufgenommen.

Im nicht erfindungsgemäßen Ausführungsbeispiel gemäß Fig. 9 ist der Verbindungsabschnitt 7 des Motorgehäuses 2 ebenfalls mit sich in Längsrichtung erstreckenden Schlitzen versehen, die zur Aufnahme von Deckelrippen dienen. Im Unterschied zum vorangegangenen Ausführungsbeispiel sind jedoch zwei unmittelbar benachbart zueinander angeordnete Schlitze 16a und 16b vorgesehen, die jeweils zur Aufnahme einer Deckelrippe am Gehäusedeckel bzw. am Bürstendeckel vorgesehen sind.

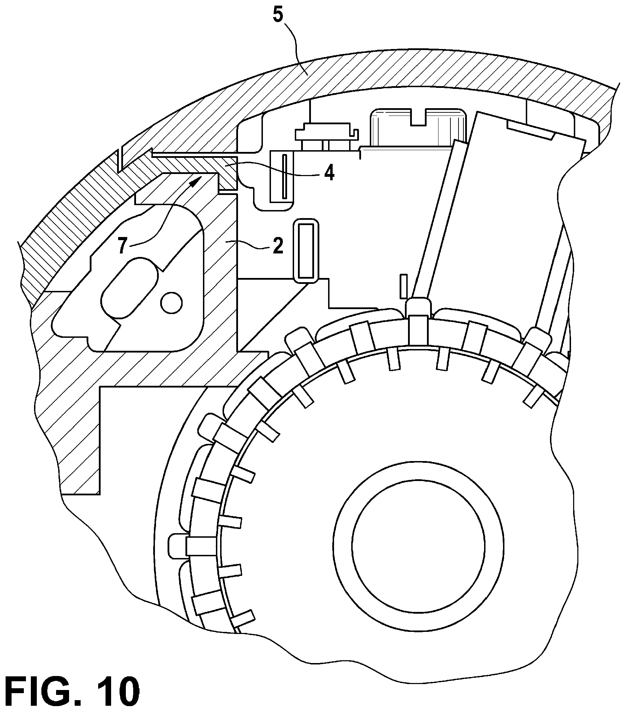

Im Ausführungsbeispiel nach Fig. 10 sind die Gehäuseteile im zusammengesetzten Zustand dargestellt. Auf dem Verbindungsabschnitt 7 des Motorgehäuses 2 liegt der Gehäusedeckel 4 auf, welcher von dem Bürstendeckel 5 übergriffen ist. Am Verbindungsabschnitt 7 ist eine Schulter gebildet, in die radial ein umgebogener Absatz am Gehäusedeckel 4 einragt. Auf diese Weise ist zwischen Motorgehäuse 2 und Gehäusedeckel 4 in Umfangsrichtung ein Formschluss gebildet.

Auch zwischen der Oberseite des Gehäusedeckels 4 und der Unterseite des Bürstendeckels 5 besteht in Umfangsrichtung eine formschlüssige Verbindung. Hierfür sind korrespondierende Absätze am Gehäusedeckel 4 und am Bürstendeckel 5 ausgebildet.

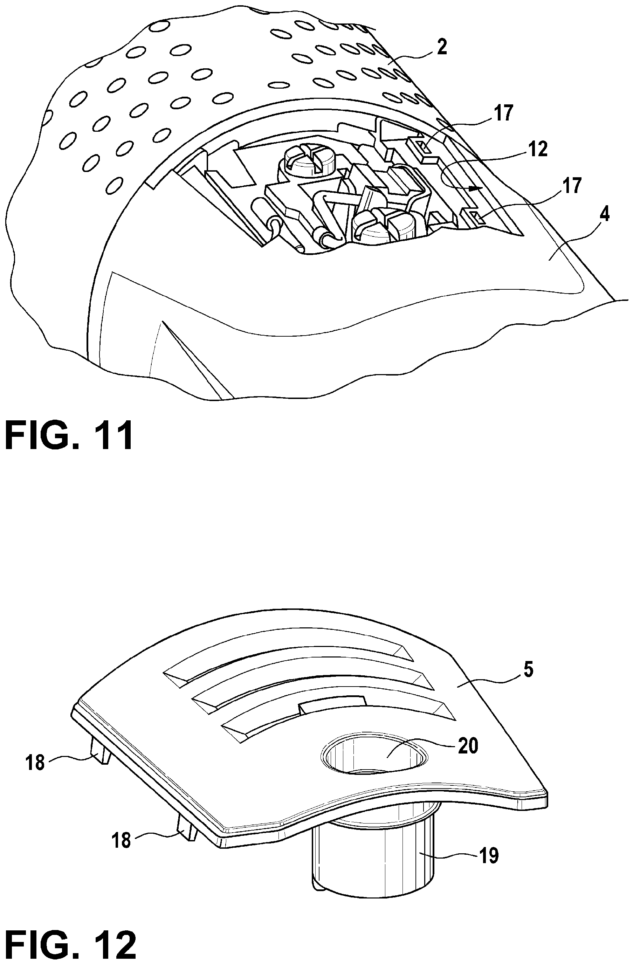

In den Fig. 11 und 12 ist ein weiteres nicht erfindungsgemäßes Ausführungsbeispiel für eine formschlüssige Verbindung des Bürstendeckels 5 am Gehäusedeckel 4 dargestellt. Im Bereich der die Bürstendeckelausnehmung 12 begrenzenden Wandung weist der Gehäusedeckel 4 eine schlitzförmige Ausnehmung 17 auf, in die im montierten Zustand ein an der Unterseite des Bürstendeckels 5 angeordneter Nocken 18 formschlüssig einragt, so dass in Umfangsrichtung ein Formschluss gegeben ist. Der Formschluss wird durch radiales Aufsetzen des Bürstendeckels hergestellt. Zweckmäßigerweise sind eine Mehrzahl von Nocken 18 und zugeordneten schlitzförmigen Ausnehmungen 17 angeordnet.

Wie Fig. 12 weiters zu entnehmen, ist an der Unterseite einteilig mit dem Bürstendeckel 5 ein Dom 19 ausgebildet, der an der Oberseite des Bürstendeckels 5 in eine Öffnung 20 mündet, über die ein Verbindungsglied, beispielsweise eine Schraube, einsetzbar ist, mit der der Bürstendeckel 5 mit dem Motorgehäuse verbunden wird.

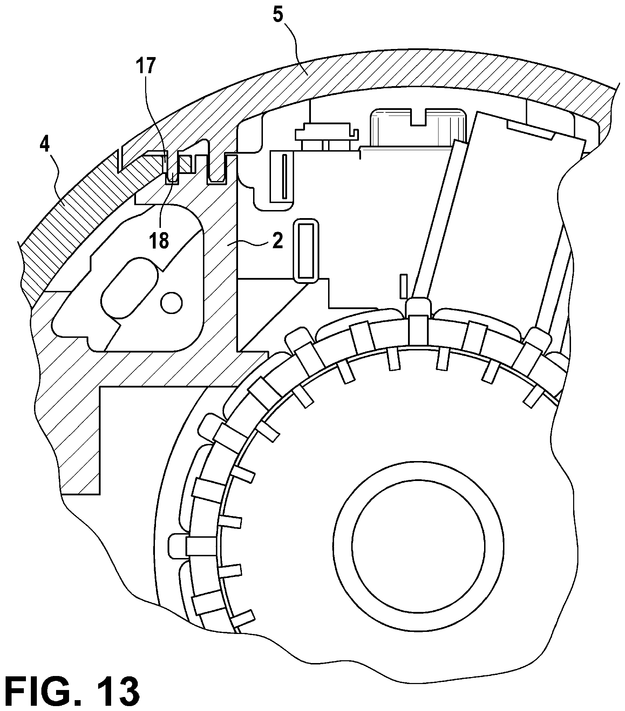

In Fig. 13 ist der verbaute Zustand mit einem Gehäusedeckel 4 gemäß Fig. 11 und einem Bürstendeckel 5 gemäß Fig. 12 dargestellt. Zu erkennen ist, dass der Bürstendeckel 5 über den Nocken 18 in der Ausnehmung 17 eine formschlüssige Verbindung mit dem Gehäusedeckel 4 eingeht. Darüber hinaus besteht in Umfangsrichtung eine weitere formschlüssige Verbindung mit dem Motorgehäuse 2, und zwar mittels einer weiteren, an der Unterseite des Bürstendeckels 5 angeordneten Rippe, die in eine Nut in der Oberseite des Motorgehäuses 2 formschlüssig einragt.

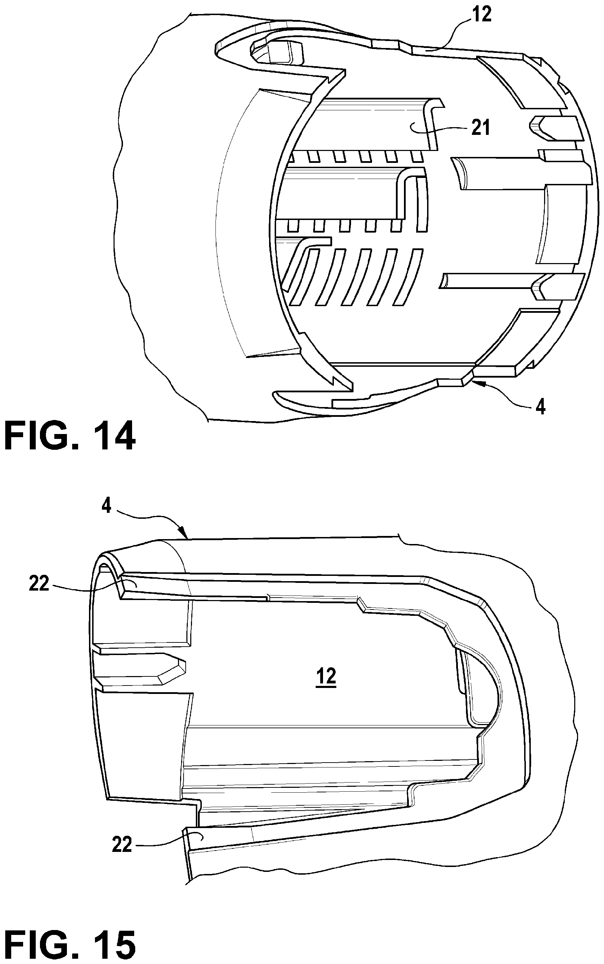

Wie Fig. 14 zu entnehmen, sind an der Innenwand des Gehäusedeckels 4 mehrere parallel angeordnete, sich radial nach innen abhebende Verschattungsrippen 21 einteilig mit der Wandung des Gehäusedeckels ausgebildet. Diese Verschattungsrippen 21 schützen elektrische Bauteile, die im Innern des Gehäuses angeordnet sind. Mindestens eine der Verschattungsrippen 21 ist axial verlängert ausgebildet und ragt im montierten Zustand axial in eine zugeordnete Ausnehmung am Motorgehäuse ein. Es kann zweckmäßig sein, diese verlängerte Verschattungsrippe 21 über die Stirnseite des Gehäusedeckels 4 herausragen zu lassen.

Im nicht erfindungsgemäßen Ausführungsbeispiel gemäß Fig. 15 ist ein radial verstärkter Abschnitt 22 in der die Bürstendeckelausnehmung 12 unmittelbar begrenzenden Wandung des Gehäusedeckels 4 dargestellt. Der radial verstärkte Abschnitt 22 weist gegenüber den sonstigen, die Bürstendeckelausnehmung 12 begrenzenden Wandabschnitten eine vergrößerte radiale Wandstärke auf. Der radial verstärkte Abschnitt 22 besitzt in Achsrichtung gesehen Keilform, die Wandstärke wächst zur Stirnseite des Gehäusedeckels 4 hin an.

Im montierten Zustand liegt auf dem die Bürstendeckelausnehmung 12 unmittelbar begrenzenden Wandabschnitt der Bürstendeckel auf, der insbesondere im Bereich des radial verstärkten Abschnittes 22 den Gehäusedeckel 4 radial nach innen drückt, so dass ein eventuell radial aufgebogener Gehäusedeckelteil im Bereich der Stirnseite des Gehäusedeckels in eine gewünschte Form gebracht wird, in der eine glattflächige Gehäuseoberfläche gegeben ist.

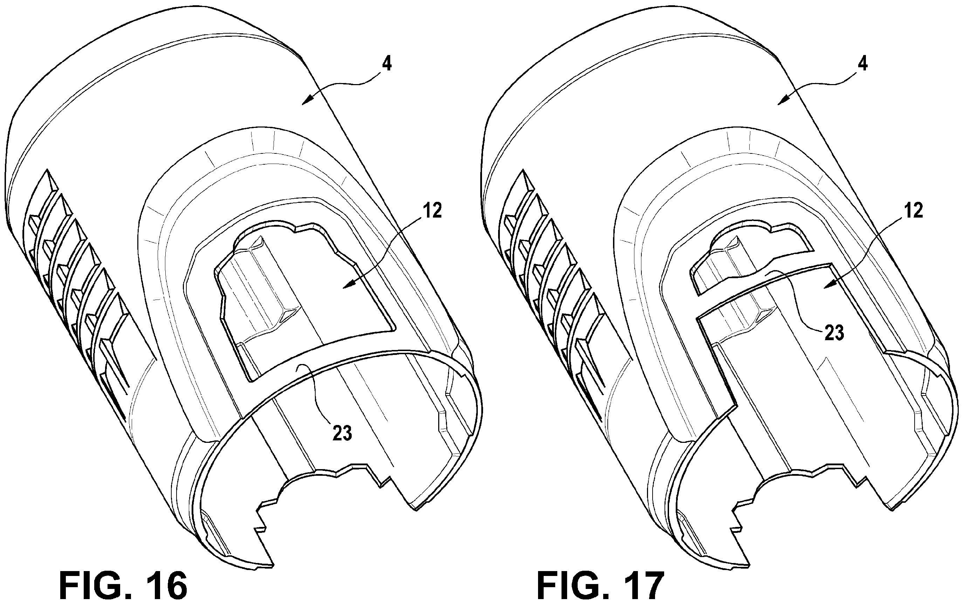

Im nicht erfindungsgemäßen Ausführungsbeispiel gemäß Fig. 16 ist zumindest eine Bürstendeckelausnehmung 12 im Gehäusedeckel 4 von einem sich in Umfangsrichtung erstreckenden Verstärkungssteg 23 vollständig überbrückt. Gemäß Fig. 16 befindet sich dieser Verstärkungssteg 23 im Bereich der axialen Stirnseite des Gehäusedeckels 4.

Im nicht erfindungsgemäßen Ausführungsbeispiel gemäß Fig. 17 ist ebenfalls ein die Bürstendeckelausnehmung 12 in Umfangsrichtung überbrückender Verstärkungssteg 23 im Gehäusedeckel 4 vorgesehen. Der Verstärkungssteg 23 ist jedoch mit axialem Abstand zur Stirnseite des Gehäusedeckels 4 platziert.

## Patentansprüche

1. Werkzeugmaschine, insbesondere Handwerkzeugmaschine, mit einem aus einem Motorgehäuse (2) und einem Gehäusedeckel (4) zusammengesetzten Gehäuse, wobei in dem Motorgehäuse (2) ein elektrischer Antriebsmotor aufgenommen ist, und mit einem Bürstendeckel (5), der in eine Bürstendeckelausnehmung (12) im Gehäusedeckel (4) lösbar einsetzbar ist, wobei am Motorgehäuse (2) und am Gehäusedeckel (4) korrespondierende Formschlusselemente angeordnet sind, die in montierter Lage formschlüssig miteinander verbunden sind, wobei der Bürstendeckel (5) am Gehäusedeckel (4) und/oder am Motorgehäuse (2) formschlüssig gehalten ist, **dadurch gekennzeichnet, dass** in einen Verbindungsabschnitt (7) am Motorgehäuse (2) ein sich in Achsrichtung erstreckender Schlitz (16) eingebracht ist, in den in montierter Lage mindestens eine Deckelrippe am Gehäusedeckel (4) und am Bürstendeckel (5) eingreift, und dass sowohl am Gehäusedeckel (4) als auch am Bürstendeckel (5) die jeweils mindestens eine Deckelrippe zum Eingriff in den Schlitz (16) am Motorgehäuse (2) angeordnet ist.

2. Werkzeugmaschine nach Anspruch 1, **dadurch gekennzeichnet, dass** ein Formschlusselement am Motorgehäuse (2) als Zentrierrippe (8) ausgebildet ist, die sich über die Mantelfläche eines Verbindungsabschnitts (7) am Motorgehäuse (2) erhebt und an der in Umfangsrichtung ein Gehäusedeckelteil abgestützt ist.

3. Werkzeugmaschine nach Anspruch 2, **dadurch gekennzeichnet, dass** die Zentrierrippe (8) am Motorgehäuse (2) eine bezogen auf die Umfangsrichtung schräggestellte Stützfläche (8a) zur Abstützung eines Gehäusedeckelteils umfasst.

4. Werkzeugmaschine nach Anspruch 2 oder 3, **dadurch gekennzeichnet, dass** die Zentrierrippe (8) am Motorgehäuse (2) einen Hinterschnittbereich (9) zur Mantelfläche des Verbindungsabschnitts (7) am Motorgehäuse (2) begrenzt, wobei in montierter Lage ein Gehäusedeckelteil in den Hinterschnittbereich (9) einragt.

5. Werkzeugmaschine nach einem der Ansprüche 2 bis 4, **dadurch gekennzeichnet, dass** in den Gehäusedeckel (4) eine Rippenausnehmung zur Aufnahme der Zentrierrippe (8) eingebracht ist.

6. Werkzeugmaschine nach einem der Ansprüche 1 bis 5, **dadurch gekennzeichnet, dass** eines der Formschlusselemente am Motorgehäuse (2) bzw. am Gehäusedeckel (4) als Nut (10) und eines als Steg (11) ausgebildet ist,wobei sich die Nut (10) und der Steg (11) in Achsrichtung des Gehäuses erstrecken.

7. Werkzeugmaschine nach einem der Ansprüche 1 bis 6, **dadurch gekennzeichnet, dass** an der Bürstendeckelausnehmung (12) im Gehäusedeckel (4) mindestens ein sich in Umfangsrichtung erstreckendes Hakenelement (14) angeordnet ist, das ein Formschlussglied (15) aufweist.

8. Werkzeugmaschine nach Anspruch 7, **dadurch gekennzeichnet, dass** das Formschlussglied (15) sich in Achsrichtung erstreckt und mit einem korrespondierenden Formschlussglied am Motorgehäuse (12) in Formschluss zu bringen ist.

9. Werkzeugmaschine nach Anspruch 7 oder 8, **dadurch gekennzeichnet, dass** das Formschlussglied (15) sich in Radialrichtung erstreckt und mit einem korrespondierenden Formschlussglied am Motorgehäuse (2) in Formschluss zu bringen ist.

10. Werkzeugmaschine nach Anspruch 9, **dadurch gekennzeichnet, dass** das Formschlussglied (15) in montierter Lage radial von dem Bürstendeckel (5) übergriffen ist.

11. Werkzeugmaschine nach einem der Ansprüche 1 bis 10, **dadurch gekennzeichnet, dass** in den Verbindungsabschnitt (7) am Motorgehäuse (2) zwei parallele, nebeneinander angeordnete und sich in Achsrichtung erstreckende Schlitze (16a, 16b) eingebracht sind, wobei in einen ersten Schlitz (16a) eine Deckelrippe am Gehäusedeckel (4) und in den zweiten Schlitz (16b) eine Deckelrippe am Bürstendeckel (5) eingreift.

12. Werkzeugmaschine nach einem der Ansprüche 1 bis 11, **dadurch gekennzeichnet, dass** am Bürstendeckel (5) ein Formschlusselement angeordnet ist, das in montierter Lage in ein korrespondierendes Formschlusselement am Motorgehäuse (2) und/oder am Gehäusedeckel (4) eingreift.

13. Werkzeugmaschine nach einem der Ansprüche 1 bis 12, **dadurch gekennzeichnet, dass** an der Innenseite des Gehäusedeckels (4) mindestens eine radial nach innen versetzte Verschattungsrippe (21) zum Schutz elektrischer Komponenten angeordnet ist, die in Eingriff mit einer zugeordneten Ausnehmung am Motorgehäuse (2) bringbar ist.

14. Werkzeugmaschine einem Ansprüche 1 bis 13, **dadurch gekennzeichnet, dass** am Gehäusedeckel (4) und/oder am Bürstendeckel (5) im Bereich der die Bürstendeckelausnehmung (12) begrenzenden und den Bürstendeckel (5) aufnehmenden Wandung ein radial verstärkter Abschnitt (22) ausgebildet ist, dessen radiale Wanddicke gegenüber benachbarten Wandabschnitten erhöht ist.

15. Werkzeugmaschine nach Anspruch 14, **dadurch gekennzeichnet, dass** der radial verstärkte Abschnitt (22) Keilform aufweist.

16. Werkzeugmaschine nach Anspruch 14 oder 15, **dadurch gekennzeichnet, dass** die radiale Wandstärke des radial verstärkten Abschnittes (22) sich in Richtung der Stirnseite des Gehäusedeckels (4) vergrößert.

17. Werkzeugmaschine nach einem der Ansprüche 1 bis 16, **dadurch gekennzeichnet, dass** die Bürstendeckelausnehmung (12) einen sich in Umfangsrichtung erstreckenden, die Bürstendeckelausnehmung (12) vollständig überbrückenden Verstärkungssteg (23) aufweist.

18. Werkzeugmaschine nach Anspruch 17, **dadurch gekennzeichnet, dass** der Verstärkungssteg (23) im Bereich der Stirnseite des Gehäusedeckels (4) angeordnet ist.

## Claims

1. Power tool, particularly hand power tool, having a housing composed of a motor housing (2) and a housing cover (4), wherein an electric drive motor is accommodated in the motor housing (2), and having a brush cover (5), which can be detachably inserted in a brush cover recess (12) in the housing cover (4), wherein corresponding form-fitting elements are disposed on the motor housing (2) and on the housing cover (4), which elements are connected to one another in a form-fitting manner in the assembled position, wherein the brush cover (5) is held on the housing cover (4) and/or on the motor housing (2) in a form-fitting manner, **characterized in that** a slot (16) that extends in the axial direction is incorporated in a connecting portion (7) on the motor housing (2), at least one cover rib on the housing cover (4) and on the brush cover (5) engaging in said slot in the assembled position,and **in that** the at least one cover rib, for engaging in the slot (16) on the motor housing (2), is disposed, respectively, both on the housing cover (4) and on the brush cover (5).

2. Power tool according to Claim 1, **characterized in that** a form-fit element is realized as a centering rib (8) on the motor housing (2), which centering rib projects above the shell surface of a connecting portion (7) on the motor housing (2) and on which a housing cover part is supported in the circumferential direction.

3. Power tool according to Claim 2, **characterized in that** the centering rib (8) on the motor housing (2) comprises a support surface (8a) that is positioned obliquely relative to the circumferential direction, for the purpose of supporting a housing cover part.

4. Power tool according to Claim 2 or 3, **characterized in that** the centering rib (8) on the motor housing (2) delimits an undercut region (9) in relation to the circumferential surface of the connecting portion (7) on the motor housing (2), wherein, in the assembled state, a housing cover part projects into the undercut region (9).

5. Power tool according to any one of Claims 2 to 4, **characterized in that** a rib recess, for receiving the centering rib (8), is incorporated in the housing cover (4).

6. Power tool according to any one of Claims 1 to 5, **characterized in that** one of the form-fitting elements on the motor housing (2) or on the housing cover (4) is realized as a groove (10) and one is realized as a web (11), wherein the groove (10) and the web (11) extend in the axial direction of the housing.

7. Power tool according to any one of Claims 1 to 6, **characterized in that** at least one hook element (14), extending in the circumferential direction and having a form-fitting device (15), is disposed on the brush cover recess (12) in the housing cover (4).

8. Power tool according to Claim 7, **characterized in that** the form-fitting device (15) extends in the axial direction and is for bringing into a form-fit with a corresponding form-fitting device on the motor housing (12).

9. Power tool according to Claim 7 or 8, **characterized in that** the form-fitting device (15) extends in the radial direction and is for bringing into a form-fit with a corresponding form-fitting device on the motor housing (2).

10. Power tool according to Claim 9, **characterized in that** the form-fitting device (15), when in the assembled position, is overlapped radially by the brush cover (5).

11. Power tool according to any one of Claims 1 to 10, **characterized in that** two parallel slots (16a, 16b), disposed next to one another and extending in the axial direction, are incorporated in the connecting portion (7) on the motor housing (2), wherein a cover rib on the housing cover (4) engages in a first slot (16a) and a cover rib on the brush cover (5) engages in the second slot (16b) .

12. Power tool according to any one of Claims 1 to 11, **characterized in that** disposed on the brush cover (5) there is a form-fitting element that, in the assembled position, engages in a corresponding form-fitting element on the motor housing (2) and/or on the housing cover (4).

13. Power tool according to any one of Claims 1 to 12, **characterized in that** at least one radially inwardly offset shading rib (21), for protecting electrical components, is disposed on the inside of the housing cover (4), which shading rib can be brought into engagement with an associated recess on the motor housing (2).

14. Power tool according to any one of Claims 1 to 13, **characterized in that** a radially reinforced portion (22) is realized on the housing cover (4) and/or on the brush cover (5), in the region of the wall that delimits the brush cover recess (12) and receives the brush cover (5), the radial wall thickness of said portion being greater than that of adjacent wall portions.

15. Power tool according to Claim 14, **characterized in that** the radially reinforced portion (22) has a wedge shape.

16. Power tool according to Claim 14 or 15, **characterized in that** the radial wall thickness of the radially reinforced portion (22) becomes greater in the direction of the end face of the housing cover (4).

17. Power tool according to any one of Claims 1 to 16, **characterized in that** the brush cover recess (12) has a reinforcing web (23), extending in the circumferential direction, that completely spans the brush cover recess (12).

18. Power tool according to Claim 17, **characterized in that** the reinforcing web (23) is disposed in the region of the end face of the housing cover (4).

## Revendications

1. Machine-outil, en particulier machine-outil à main, comprenant un boîtier constitué d'un boîtier de moteur (2) et d'un couvercle de boîtier (4), un moteur d'entraînement électrique étant reçu dans le boîtier de moteur (2), et comprenant un couvercle de balais (5) qui peut être inséré de manière amovible dans le couvercle de boîtier (4) dans un évidement de couvercle de balais (12), des éléments d'engagement par correspondance de formes correspondants étant disposés au niveau du boîtier de moteur (2) et au niveau du couvercle de boîtier (4), lesquels, dans la position montée, sont connectés les uns aux autres par engagement par correspondance de formes, le couvercle de balais (5) étant retenu par engagement par correspondance de formes sur le couvercle de boîtier (4) et/ou sur le boîtier de moteur (2), **caractérisée en ce que**, dans une portion de connexion (7) sur le boîtier de moteur (2), est réalisée une fente (16) s'étendant dans la direction axiale, dans laquelle, dans la position montée, s'engage au moins une nervure de couvercle sur le couvercle de boîtier (4) et sur le couvercle de balais (5) et **en ce que** l'au moins une nervure de couvercle respective est disposée à la fois sur le couvercle de boîtier (4) et sur le couvercle de balais (5) de manière à venir en prise dans la fente (16) sur le boîtier de moteur (2).

2. Machine-outil selon la revendication 1, **caractérisée en ce qu'**un élément d'engagement par correspondance de formes au niveau du boîtier de moteur (2) est réalisé en tant que nervure de centrage (8) qui est rehaussée au-dessus de la surface d'enveloppe d'une portion de connexion (7) sur le boîtier de moteur (2) et contre laquelle une partie de couvercle de boîtier est supportée dans la direction périphérique.

3. Machine-outil selon la revendication 2, **caractérisée en ce que** la nervure de centrage (8) au niveau du boîtier de moteur (2) comprend une surface de support (8a) en biais par rapport à la direction périphérique pour le support d'une partie de couvercle de boîtier.

4. Machine-outil selon la revendication 2 ou 3, **caractérisée en ce que** la nervure de centrage (8) au niveau du boîtier de moteur (2) délimite une région de contre-dépouille (9) vers la surface d'enveloppe de la portion de connexion (7) au niveau du boîtier de moteur (2), une partie de couvercle de boîtier pénétrant dans la région de contre-dépouille (9) dans la position montée.

5. Machine-outil selon l'une quelconque des revendications 2 à 4, **caractérisée en ce qu'**un évidement de nervure pour recevoir la nervure de centrage (8) est réalisé dans le couvercle de boîtier (4).

6. Machine-outil selon l'une quelconque des revendications 1 à 5, **caractérisée en ce que** l'un des éléments d'engagement par correspondance de formes est réalisé au niveau du boîtier de moteur (2) ou au niveau du couvercle de boîtier (4) sous la forme d'une rainure (10) et l'un est réalisé sous la forme d'une nervure (11), la rainure (10) et la nervure (11) s'étendant dans la direction axiale du boîtier.

7. Machine-outil selon l'une quelconque des revendications 1 à 6, **caractérisée en ce qu'**au moins un élément de crochet (14) s'étendant dans la direction périphérique est disposé au niveau de l'évidement de couvercle de balais (12) dans le couvercle de boîtier (4) et présente un organe d'engagement par correspondance de formes (15).

8. Machine-outil selon la revendication 7, **caractérisée en ce que** l'organe d'engagement par correspondance de formes (15) s'étend dans la direction axiale et doit être amené en engagement par correspondance de formes avec un organe d'engagement par correspondance de formes correspondant sur le boîtier de moteur (12).

9. Machine-outil selon la revendication 7 ou 8, **caractérisée en ce que** l'organe d'engagement par correspondance de formes (15) s'étend dans la direction radiale et doit être amené en engagement par correspondance de formes avec un organe d'engagement par correspondance de formes correspondant sur le boîtier de moteur (2).

10. Machine-outil selon la revendication 9, **caractérisée en ce que** l'organe d'engagement par correspondance de formes (15), dans la position montée, est saisi par le dessus radialement par le couvercle de balais (5).

11. Machine-outil selon l'une quelconque des revendications 1 à 10, **caractérisée en ce que** dans la portion de connexion (7) au niveau du boîtier de moteur (2) sont réalisées deux fentes parallèles (16a, 16b) disposées l'une à côté de l'autre et s'étendant dans la direction axiale, une nervure de couvercle s'engageant dans une première fente (16a) au niveau du couvercle de boîtier (4) et une nervure de couvercle s'engageant dans la deuxième fente (16b) au niveau du couvercle de balais (5).

12. Machine-outil selon l'une quelconque des revendications 1 à 11, **caractérisée en ce qu'**un élément d'engagement par correspondance de formes est disposé au niveau du couvercle de balais (5), lequel, dans la position montée, vient en prise dans un élément d'engagement par correspondance de formes correspondant sur le boîtier de moteur (2) et/ou sur le couvercle de boîtier (4).

13. Machine-outil selon l'une quelconque des revendications 1 à 12, **caractérisée en ce qu'**au moins une nervure d'opacité (21) décalée radialement vers l'intérieur est disposée au niveau du côté intérieur du couvercle de boîtier (4) pour protéger les composants électriques, laquelle peut être amenée en prise avec un évidement associé au niveau du boîtier de moteur (2) .

14. Machine-outil selon l'une quelconque des revendications 1 à 13, **caractérisée en ce que** dans la région de la paroi délimitant l'évidement de couvercle de balais (12) et recevant le couvercle de balais (5), au niveau du couvercle de boîtier (4) et/ou au niveau du couvercle de balais (5), est réalisée une portion renforcée radialement (22) dont l'épaisseur de paroi radiale est augmentée par rapport aux portions de paroi adjacentes.

15. Machine-outil selon la revendication 14, **caractérisée en ce que** la portion renforcée radialement (22) présente une forme en coin.

16. Machine-outil selon la revendication 14 ou 15, **caractérisée en ce que** l'épaisseur de paroi radiale de la portion renforcée radialement (22) augmente dans la direction du côté frontal du couvercle de boîtier (4).

17. Machine-outil selon l'une quelconque des revendications 1 à 16, **caractérisée en ce que** l'évidement de couvercle de balais (12) présente une nervure de renforcement (23) s'étendant dans la direction périphérique, recouvrant complètement l'évidement de couvercle de balais (12).

18. Machine-outil selon la revendication 17, **caractérisée en ce que** la nervure de renforcement (23) est disposée dans la région du côté frontal du couvercle de boîtier (4).
